Europäisches Patentamt

(19) European Patent Office

Office européen des brevets

(11) Numéro de publication : **0 316 233 B1**

(12) # FASCICULE DE BREVET EUROPEEN

(45) Date de publication du fascicule du brevet :
22.05.91 Bulletin 91/21

(51) Int. Cl.⁵ : **B23P 15/00**, B23B 47/28, F02K 1/04

(21) Numéro de dépôt : 88402812.7

(22) Date de dépôt : 09.11.88

(54) **Méthode d'assemblage de deux pièces en matériaux ayant des coefficients de dilatation thermique différents.**

(30) Priorité : 12.11.87 FR 8715615

(43) Date de publication de la demande :
17.05.89 Bulletin 89/20

(45) Mention de la délivrance du brevet :
22.05.91 Bulletin 91/21

(84) Etats contractants désignés :
DE ES FR GB IT

(56) Documents cités :
EP-A- 0 080 404
DE-A- 2 649 582
FR-A- 2 500 905
US-A- 4 238 092
METALWORKING PRODUCTION, vol. 22, no.
108, 27 mai 1964, page 55; A. WARD: "Drill jig
for angles is adjustable for length"

(73) Titulaire : **SOCIETE NATIONALE D'ETUDE ET DE CONSTRUCTION DE MOTEURS D'AVIATION, "S.N.E.C.M.A."**
**2, Boulevard du Général Martial Valin**
**F-75015 Paris (FR)**

(72) Inventeur : **Bouiller, Jean Georges**
**10, rue Kléber**
**F-91800 Brunoy (FR)**
Inventeur : **Jourdain, Gérard Ernest André**
**4, Résidence l'Arcadie Saintry sur Seine**
**F-91100 Corbeil-Essonnes (FR)**
Inventeur : **Loubet, Marc Georges**
**87-3 Chemin des Acacias**
**F-77176 Nandy Cédex 510 (FR)**

(74) Mandataire : **Moinat, François et al**
**S.N.E.C.M.A. Service des Brevets Boîte Postale 81**
**F-91003 Evry Cédex (FR)**

## Description

L'invention concerne une méthode d'assemblage d'un ensemble constitué de deux pièces de révolution coaxiales, constituées en des matériaux ayant des coefficients de dilatation thermique linéaire nettement différents et reliées entre elles par des moyens de fixation. L'invention vise notamment la fixation d'un cône d'éjection de turboréacteur en matériau composite de type céramique sur un carter d'échappement en matériau métallique.

Les avantages résultant de l'utilisation de certains matériaux dits composites et notamment de type céramique et dus à leur faible masse volumique et à leurs qualités de tenue aux hautes températures parfois exigées sont bien connus dans la construction aéronautique, y compris par les motoristes. Toutefois l'association parfois souhaitable et la fixation l'une sur l'autre, d'une pièce en matériau composite et d'une pièce métallique, comme cela est notamment le cas pour la fixation d'un cône d'éjection sur un carter d'échappement d'un moteur nécessite des moyens de liaison adaptés aux conditions sévères d'utilisation tenant d'une part à l'environnement thermique à hautes températures et d'autre part aux efforts alternés induits par les dilatations différentielles.

EP-A 0 080 404 propose une solution à ces problèmes utilisant des biellettes et des axes de fixation. Toutefois sa mise en oeuvre fait apparaître des difficultés de montage imposant des tolérances très serrées qui rendent la fabrication coûteuse et en outre, en fonctionnement, des jeux trop importants sont également apparus, dus aux frottements induits par les déplacements relatifs.

Par suite, l'invention vise à obtenir une méthode d'assemblage de deux pièces de manière à résoudre les problèmes résultant des dilatations différentielles entre pièces, en éliminant l'apparition de jeux en fonctionnement dans les moyens de fixation, tout en assurant la réduction des masses, la simplicité et les facilités de mise en oeuvre de l'ensemble assemblé.

Ces résultats améliorés sont obtenus grâce à une méthode d'assemblage d'un ensemble constitué de deux pièces de révolution coaxiales, dont les moyens de fixation reliant ces pièces entre elles comportent au moins trois pattes métalliques élastiques, chacune de forme générale trapézoïdale, avec une grande base présentant un bord tombé fixé au moins en deux points, en chaque point, au moyen d'un rivet creux et d'un boulon, sur une couronne métallique solidarisée avec la première pièce et avec une petite base fixée au moins en un point au moyen d'un boulon sur la surface interne de la deuxième pièce.

Ladite méthode d'assemblage conforme à l'invention comporte au moins les étapes suivantes :
– (a) une première opération de perçage au cours de laquelle les pattes de fixation sont maintenues au niveau de leur grande base entre, d'une part, une couronne d'appui comportant un premier évidement annulaire et des perçages calibrés disposés suivant un cercle et débouchant dans un deuxième évidement annulaire, situé radialement à l'intérieur du premier évidement et dans lequel sont placés les bords tombés des pattes en appui sur ladite couronne métallique qui est destinée à être solidarisée avec la première pièce et d'autre part, des brides de maintien fixées sur ladite couronne d'appui et où on réalise le perçage des trous de fixation sur les bords tombés des pattes métalliques et sur ladite couronne métallique ;
– (b) une deuxième opération de perçage au cours de laquelle les pattes de fixation sont maintenues au niveau de leur petite base entre, d'une part, une deuxième pièce-modèle centrée dans ledit premier évidement annulaire de la couronne d'appui et comportant des perçages calibrés disposés sur un cercle dont le diamètre est inférieur à celui des perçages réalisés sur la deuxième pièce entrant dans ledit ensemble et, d'autre part, des brides de maintien fixées sur ladite deuxième pièce-modèle et où on réalise le perçage des trous de fixation sur la petite base des pattes métalliques ;
– (c) une première opération de fixation des bords tombés des pattes métalliques sur la couronne métallique au moyen de rivets creux qui sont introduits dans les perçages réalisés lors de l'opération (a) ;
– (d) une deuxième opération de fixation de la deuxième pièce sur les petites bases des pattes métalliques au moyen de boulons introduits dans les perçages réalisés lors de l'opération (b) de manière que les pattes subissent une déformation dans une direction radiale vers l'extérieur induisant une précontrainte à froid
– (e) une troisième opération de fixation du sous-ensemble obtenu à l'issue des opérations précédentes (c) et (d) sur la première pièce au moyen de boulons introduits dans lesdits rivets creux.

D'autres caractéristiques et avantages de l'invention seront mieux compris à la lecture qui va suivre de la description d'un mode de réalisation de l'invention, en référence aux dessins annexés sur lesquels :
– la figure 1 représente une vue partielle en coupe par un plan passant par l'axe longitudinal du turboréacteur d'un cône d'éjection relié par des moyens de fixation à un carter d'échappement de turboréacteur, selon la méthode d'assemblage conforme à l'invention ;
– la figure 2 montre une vue suivant la flèche F de l'ensemble représenté à la figure 1, le cône d'éjection étant enlevé ;
– la figure 3 représente, selon une vue en perspective, une patte métallique de fixation entrant dans l'ensemble représenté aux figures 1 et 2 ;
– la figure 4 représente, selon une vue partielle en coupe par un plan passant par son axe de symétrie, un gabarit de perçage utilisé dans des opérations de perçage des pattes de fixation, constituant des étapes de la méthode d'assemblage de deux pièces de révolution conforme à l'invention ;

– la figure 5 représente un stade intermédiaire dans l'application de la méthode d'assemblage conforme à l'invention.

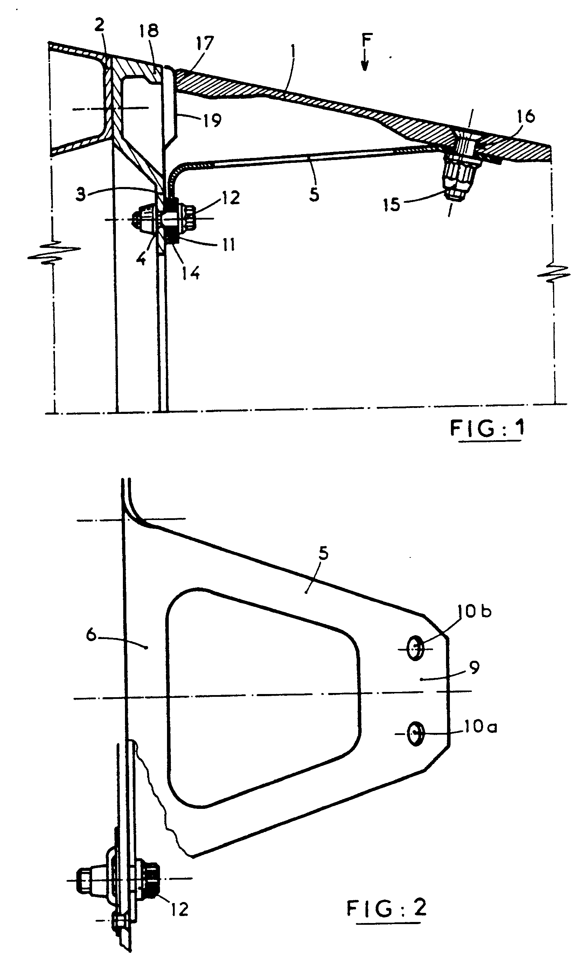

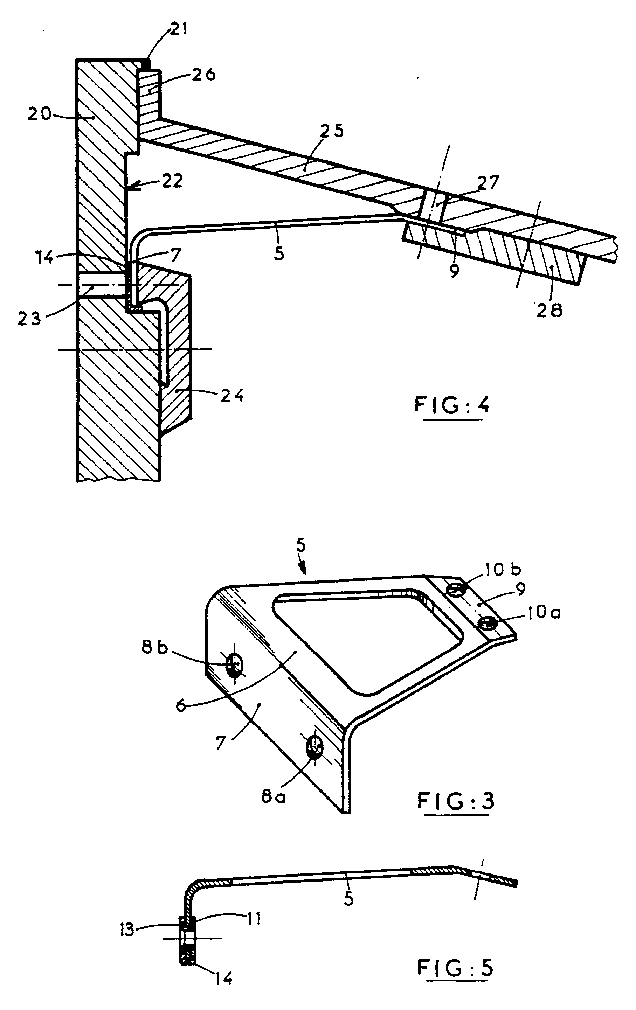

Comme le montre la vue partielle de la figure 1, un cône d'éjection 1 est fixé sur un carter d'échappement 2 de turboréacteur, les deux pièces 1 et 2 étant de révolution autour de l'axe du turboréacteur. Le cône d'éjection 1 est en un matériau composite, par exemple de type céramique et est relié au carter 2 qui, de manière classique, est métallique, notamment en un superalliage présentant de hautes caractéristiques de tenue mécanique aux hautes températures qui dans cette zone sont comprises entre 650°C et 850°C et peuvent atteindre 900°C. L'extrémité aval du carter 2 comporte une bride radiale annulaire 3 tournée vers l'intérieur, c'est-à-dire vers l'axe du turboréacteur et sur laquelle sont percés une pluralité de trous 4 régulièrement répartis sur un cercle. Ledit cône d'éjection 1 est fixé sur ladite bride 3 du carter d'échappement 2 au moyen d'une pluralité de pattes métalliques 5, au nombre d'au moins trois. Chaque patte métallique 5, comme visible sur les figures 2 et 3, a la forme générale d'un trapèze isocèle dont la grande base 6 comporte un bord tombé 7 sur lequel sont percés deux trous 8a et 8b et la petite base 9 comporte également deux trous 10a et 10b. La liaison entre les pattes 5 et le carter 2 est assurée au niveau des trous respectifs 8a, 8b et 4 au moyen de rivets creux 11 et de boulons 12, passant également dans des perçages 13 d'une couronne métallique 14 interposée entre les bords tombés 7 de pattes métalliques 5 et la bride 3 du carter d'échappement 2. A leur autre extrémité, les pattes 5 sont fixées sur le cône d'éjection 1 au moyen de boulons 15 passant dans les trous 10a et 10b et dans des perçages coopérants 16 disposés sur le cône d'éjection 1. Entre l'extrémité circulaire 17 d'embase du cône d'éjection 1 et le bord aval 18 coopérant du carter d'échappement 2 est placé un joint métallique 19 qui assure la continuité entre les bords et l'étanchéité en fonctionnement tout en permettant des dilatations, notamment d'origine thermique, dans le sens longitudinal.

L'assemblage des éléments qui viennent d'être décrits est toutefois réalisé selon une méthode particulière, conforme à l'invention et qui permet une mise en précontrainte à froid des pattes métalliques 5 qui sont en un matériau acceptant une déformation élastique suffisante. Par exemple, dans l'assemblage décrit d'un cône d'éjection 1 et d'un carter d'échappement 2 du turboréacteur, les pattes métalliques 5 sont radialement déformées vers l'extérieur d'environ 1 mm au rayon. Un matériau composite céramique peut également, en variante, être utilisé pour les pattes 5.

Dans cette méthode d'assemblage, une première opération de perçage (a) consiste à percer les trous 8a et 8b du bord tombé 7 des pattes métalliques 5 en même temps que les perçages 13 de la couronne métallique 14. Pour cette opération (a), on utilise un gabarit de perçage représenté à la figure 4 qui est composé d'une couronne d'appui 20 comportant un premier évidement annulaire 21 et un deuxième évidement annulaire 22 disposés radialement à l'intérieur du premier. L'outil de perçage (non représenté au dessin) passe par des perçages calibrés 23 débouchant dans ledit deuxième évidement annulaire 22 et disposés suivant un cercle. La couronne métallique 14 et les bords tombés 7 des pattes métalliques 5 sont maintenus durant l'opération de perçage (a) entre la face du deuxième évidement annulaire 22 et des brides de maintien 24 fixées sur ladite couronne d'appui 20 par tout moyen connu, de type boulonnage par exemple.

Pour une deuxième opération de perçage (b) par laquelle on réalise les trous 10a et 10b sur la petite base 9 des pattes métalliques 5, un cône-modèle 25 est adjoint au gabarit de perçage et est maintenu centré par son embase 26 dans le premier évidement annulaire 21 de ladite couronne d'appui 20. Sur ledit cône-modèle 25 sont également disposés des perçages calibrés 27 répartis sur un cercle dont le diamètre est inférieur d'environ 2 mm, par exemple, à celui du cercle des perçages qui sont, par ailleurs, réalisés sur le cône d'éjection 1. Les pattes 5 sont également maintenues par des brides de maintien 28 fixées sur ledit cône-modèle 25 par tout moyen connu, de type boulonnage par exemple.

La séquence d'assemblage se poursuit ensuite de la manière suivante. Dans une première opération de fixation (c), les rivets creux 11 introduits dans les trous 8a, 8b et les perçages 13 assurent la fixation des bords tombés 7 des pattes métalliques 5 sur la couronne métallique 14. La figure 5 montre ce stade intermédiaire de l'assemblage. Dans une deuxième opération de fixation (d), le cône d'éjection 1 est fixé sur les pattes métalliques 5 au moyen des boulons 15 passant par les perçages 16 du cône d'éjection 1 et par les trous 10a et 10b de la petite base 9 des pattes 5. Pour effectuer le serrage des boulons 15 et compte-tenu de l'écart au diamètre de 2 mm mentionné ci-dessus et introduit lors de la deuxième opération de perçage (b), les pattes 5 sont déformées élastiquement d'environ 1 mm vers l'extérieur, enduisant ainsi dans lesdites pattes 5 une mise en précontrainte à froid correspondante lors de l'assemblage. Une troisième opération de fixation (e) achève l'assemblage et consiste à fixer le sous-ensemble obtenu à l'issue des opérations (c) et (d) sur le carter d'échappement 2 en plaçant les boulons 12 dans les rivets creux 11 et dans les trous 4 de la bride radiale 3 dudit carter d'échappement 2.

Pour chaque ensemble de deux pièces de révolution coaxiales obtenu par la méthode d'assemblage qui vient d'être décrite, les cotes des cercles de perçage et les déformations des pattes 5 de fixation qui en résultent sont calculées de manière que les précontraintes à froid desdites pattes 5 ont tendance à s'annuler en fonctionnement, aux hautes températures d'utilisation, du fait des écarts des dilatations d'origine thermique entre les pièces de l'ensemble. De cette façon, une bonne tenue mécanique satisfaisante est obtenue pour l'ensemble en fonctionnement et on évite notamment une dégradation rapide des caractéristiques mécaniques et un périssement des éléments de liaison, en évitant l'apparition des contraintes élevées supportées par les fixations, pouvant atteindre dans certaines applications et en l'absence des dispositions conformes à l'invention des niveaux de l'ordre de 700 MPa, nettement supérieures à celles qui sont admissibles pour des durées de vie réalistes de matériaux de type superalliages habituellement envisagés dans ces applications, notamment aéronautiques. En plus de ces avantages, on notera encore que les moyens de fixation conforme à l'invention entre deux pièces de révolution coaxiales sont capables de reprendre des efforts tangentiels et peuvent notamment transmettre un couple dans des applications où l'une des pièces est un arbre composite et l'autre une pièce métallique ou vice versa.

Les deux pièces de révolution coaxiales, en des matériaux ayant des coefficients de dilatation thermique linéaire nettement différents, dont le mode de liaison et les moyens de fixation viennent d'être décrits dans le cas d'un cône d'éjection de turboréacteur fixé sur un carter d'échappement peuvent également être constituées d'un mélangeur à lobes en matériau composite fixé sur un carter d'échappement métallique ou, au lieu de s'appliquer à des pièces fixes, la liaison décrite peut s'appliquer à des pièces mobiles en rotation, telles qu'un disque en matériau composite sur un arbre métallique.

## Revendications

1. Méthode d'assemblage de deux pièces (1, 2) de révolution coaxiales, en des matériaux ayant des coefficients de dilatation thermique linéaire nettement différents et reliés entre elles par des moyens de fixation (5) pour constituer un ensemble, la première pièce étant notamment un carter d'échappement (2) métallique d'un turboréacteur sur lequel est fixée la deuxième pièce qui est notamment un cône intérieur d'éjection (1) en matériau composite caractérisée en ce qu'elle comporte au moins les étapes suivantes :
– (a) une première opération de perçage au cours de laquelle les pattes de fixation (5) sont maintenues au niveau de leur grande base entre, d'une part, une couronne d'appui (20) comportant un premier évidement (21) annulaire et des perçages calibrés (23) disposés suivant un cercle et débouchant dans un deuxième évidement (22) annulaire, situé radialement à l'intérieur du premier évidement (21) et dans lequel sont placés les bords tombés (7) des pattes (5) en appui sur ladite couronne métallique (14) qui est destinée à être solidarisée avec la première pièce (2) et d'autre part, des brides de maintien (24) fixées sur ladite couronne d'appui (20) et où on réalise le perçage des trous de fixation (8a, 8b ; 13) sur les bords tombés 7 des pattes (5) métalliques et sur ladite couronne métallique (14) ;
– (b) une deuxième opération de perçage au cours de laquelle les pattes (5) de fixation sont maintenues au niveau de leur petite base (9) entre, d'une part, une deuxième pièce modèle (25) centrée dans ledit premier évidement (21) annulaire de la couronne d'appui (20) et comportant des perçages calibrés (27) disposés sur un cercle dont le diamètre est inférieur à celui des perçages (16) réalisés sur la deuxième pièce (1) entrant dans ledit ensemble et, d'autre part, des brides de maintien (28) fixées sur ladite deuxième pièce-modèle (25) et où on réalise le perçage d'au moins un trou de fixation (10a, 10b) sur la petite base (9) des pattes métalliques ;
– (c) une première opération de fixation des bords tombés (7) des pattes (5) métalliques sur la couronne métallique (14) au moyen de rivets creux (11) qui sont introduits dans les perçages (8a, 8b ; 13) réalisés lors de l'opération (a) ;
– (d) une deuxième opération de fixation de la deuxième pièce (1) sur les petites bases (9) des pattes (5) métalliques au moyen de boulons (15) introduits dans les perçages (10a, 10b) réalisés lors de l'opération (b) de manière que les pattes (5) subissent une déformation dans une direction radiale vers l'extérieur induisant une précontrainte à froid ;
– (e) une troisième opération de fixation du sous-ensemble obtenu à l'issue des opérations précédentes (c) et (d) sur la première pièce (1) au moyen de boulons (12) introduits dans lesdits rivets creux (11).

## Ansprüche

1. Verfahren zum Zusammenbau von zwei koaxialen Drehteilen (1, 2), die aus Materialien mit deutlich unterschiedlichen linearen Wärmeausdehnungskoeffizienten bestehen und durch Befestigungsmittel (5) zu einer Baueinheit verbunden sind, wobei das erste Werkstück insbesondere das aus Metall bestehende Auslaßgehäuse (2) eines Turboluftstrahltriebwerks ist, an dem das insbesondere von dem inneren Ausströmkomus (1) aus Verbundwerkstoff gebildeten zweiten Werkstück befestigt ist, **gekennzeichnet durch** zumindest folgende Verfahrensschritte :

(a) einen ersten Bohrvorgang, während dessen die Befestigungslappen (5) im Bereich ihrer großen Basis gehalten werden zwischen einem Stützring (20) einerseits mit einer ersten ringförmigen Vertiefung (21) und auf einem Kreis angeordneten kalibrierten Bohrungen (23), die in einer zweiten ringförmigen Vertiefung (22) münden, die radial innerhalb der ersten Vertiefung (21) angeordnet ist und in der die abgewinkelten Ränder (7) der Befestigungslappen (5) so plaziert sind, daß sie sich gegen den mit dem ersten Werkstück (2) zu verbindenden Metallring (14) abstützen, und Halteflanschen (24) andererseits, die an dem Stützring (20) befestigt sind und an deren Ort die Befestigungslöcher (8a, 8b ; 13) in den abgewinkelten Rändern (7) der Befestigungslappen (5) aus Metall und in dem genannten Metallring (14) hergestellt werden,

(b) einen zweiten Bohrvorgang, während dessen die Befestigungslappen (5) im Bereich ihrer kleinen Basis (9) gehalten werden zwischen einem zweiten Modellteil (25) einerseits, das in der ersten ringförmigen Vertiefung (21) des Stützrings (20) zentriert ist und kalibrierte Bohrungen (27) aufweist, die auf einem Kreis liegen, dessen Durchmesser kleiner ist als der Durchmesser des Kreises, auf dem die an dem zweiten Werkstück (1) der genannten Baueinheit hergestellten Bohrungen (16) liegen, und Halteflanschen (28) andererseits, die an dem zweiten Modellteil (25) befestigt sind und an deren Ort ein Befestigungsloch (10a, 10b) in der kleinen Basis (9) der Befestigungslappen aus Metall hergestellt wird,

(c) einen ersten Befestigungsvorgang zum Befestigen der abgewinkelten Ränder (7) der Befestigungslappen (5) aus Metall an dem Metallring (14) mit Hilfe von Hohlnieten (11), die in die bei dem Arbeitsvorgang (a) hergestellten Befestigungslöcher (8a, 8b; 13) eingeführt werden,

(d) einen zweiten Befestigungsvorgang zum Befestigen des zweiten Werkstücks (1) an den kleinen Basen (9) der Befestigungslappen (5) aus Metall mit Hilfe von Schraubenbolzen (15), die in die bei dem Arbeitsvorgang (b) hergestellten Befestigungslöcher (10a, 10b) eingeführt werden, derart daß die Befestigungslappen (5) einer Verformung in einer radial nach außen weisenden Richtung unterworfen werden, die eine Kaltvorspannung verursacht, und

(e) einen dritten Befestigungsvorgang zum Befestigen der durch die Arbeitsvorgänge (c) und (d) gebildeten Untereinheit an dem ersten Werkstück (2) mit Hilfe von Schraubenbolzen (12), die in die Hohlnieten (11) eingeführt werden.

ted to each other by a means of fixing (5) so as to constitute a whole, the first body being notably a metallic exhaust casing (2) of a turbojet engine to which is fixed the second body which is notably an inner tail cone (1) in a composite material, characterised in that it comprises at least the following steps :

– (a) a first drilling operation during which the fixing stirrups (5) are held at their wider base between, on the one hand, a supporting ring (20) comprising a first annular recess (21) and the gauged holes (23) arranged in a circle and opening into a second annular recess (22), situated radially inwards of the first recess (21) and in which the returned edges (7) of the stirrups (5) are placed up against the said metal ring (14) which is designed to be rigidly attached to the first body (2) and, on the other hand, the clamping flanges (24) fixed to the said supporting ring (20) and where the fixing holes (8a, 8b, 13) are drilled through the returned edges (7) of the metal fixing stirrups (5) and the metal ring (14) ;

– (b) a second drilling operation during which the fixing stirrups (5) are held at their smaller base (9) between, on the one hand, a second template (25) centered by the said first annular recess (21) of the supporting ring (20) and comprising the gauged holes (27) arranged around a circle whose diameter is smaller than that of the holes (16) drilled in the second body (1) belonging to the said whole and, on the other hand, the clamping flanges (28) fixed to the said template (25) and where at least one hole (10a, 10b) is drilled in the smaller base (9) of the metal stirrups ;

– (c) a first fixing operation the returned edges (7) of the metal stirrups (5) to the metal ring (14) by means of the hollow rivets (11) which are put into the holes (8a, 8b, 13) made during the first operation (a);

– (d) a second fixing operation of the second body (1) to the smaller bases (9)of the metal stirrups (5) by means of the bolts (15) placed in the holes (10a, 10b) made during the operation (b) in such a way that the stirrups (5) undergo a deformation a radially outwards direction, introducing a cold prestress ;

– (e) a third fixing operation of the sub-assembly thus obtained following the preceding operations (c) and (d) onto the first body (1) by means of the bolts (12) passed through the hollow rivets (11).

## Claims

1. A method of assembling two coaxial bodies of revolution (1, 2), in materials of distinctly differing coefficients of linear thermal expansion and connec-

FIG : 1

FIG : 2

FIG:4

FIG:3

FIG:5